(19) Europäisches Patentamt
European Patent Office
Office européen des brevets

(11) Veröffentlichungsnummer: **0 226 847**
**B1**

(12) **EUROPÄISCHE PATENTSCHRIFT**

(45) Veröffentlichungstag der Patentschrift: **23.08.89**

(51) Int. Cl.⁴: **C08G 63/60**, C08G 63/68, C08G 63/66

(21) Anmeldenummer: **86116320.2**

(22) Anmeldetag: **25.11.86**

(54) **Vollaromatische mesmorphe Polyetherester, deren Herstellung und Verwendung.**

(30) Priorität: **04.12.85 DE 3542778**

(43) Veröffentlichungstag der Anmeldung:
**01.07.87 Patentblatt 87/27**

(45) Bekanntmachung des Hinweises auf die Patenterteilung:
**23.08.89 Patentblatt 89/34**

(84) Benannte Vertragsstaaten:
**AT BE CH DE FR GB IT LI LU NL SE**

(56) Entgegenhaltungen:
**EP-A- 0 081 900**
**EP-A- 0 139 303**
**US-A- 4 196 275**

(73) Patentinhaber: **BASF Aktiengesellschaft, Carl-Bosch-Strasse 38, D-6700 Ludwigshafen(DE)**

(72) Erfinder: **Portugall, Michael, Dr., Raiffeisenstrasse 7, D-6706 Wachenheim(DE)**
Erfinder: **Blinne, Gerd, Dr., Im Woogtal 7, D-6719 Bobenheim(DE)**
Erfinder: **Sterzel, Hans-Josef, Dr., Wasgauring 3, D-6701 Dannstadt-Schauernheim(DE)**

**EP 0 226 847 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind vollaromatische mesomorphe Polyetherester, die unterhalb 320°C eine flüssigkristalline fadenbildende Schmelze bilden.

Es sind schon eine Reihe von flüssigkristallinen Polyestern bekannt. Solche Polymere sind jedoch hinsichtlich ihrer Wärmeformbeständigkeit, ihrer Verarbeitbarkeit und insbesondere ihrer Oberflächenqualität, die eine zu geringe Abriebfestigkeit zeigt, verbesserungsbedürftig. In der EP-A-115 967 werden Polyester, die z.B. aus Hydroxinaphthalincarbonsäure und para-Hydroxibenzoesäure oder aus Hydroxinaphthalincarbonsäure, Hydrochinon und Terephthalsäure aufgebaut sind, beschrieben. Um die Oberflächenqualität zu verbessern, sollen solche Polymere einen Gehalt an Wollastonit haben. Durch den Zusatz von Füllmitteln werden jedoch andere Eigenschaften negativ beeinflußt. Ferner sind aus der EP-A-102 160 flüssigkristalline Polyester bekannt, die aus p-Hydroxibenzoesäure, Terephthalsäure, aromatischen Dihydroxiverbindungen sowie einem verminderten Gehalt an Hydroxinaphthalincarbonsäure aufgebaut sind. Die dort beschriebenen flüssigkristallinen Polyester haben jedoch eine Glasübergangstemperatur von 110°C und sind deshalb in ihrer Wärmeformbeständigkeit verbesserungsbedürftig. In der EP-A- 81 900 werden flüssigkristalline Polyesteramide und Polyester beschrieben, die aus einer Vielzahl von aromatischen Dicarbonsäuren und aromatischen Dihydroxiverbindungen aufgebaut sein können. Unter anderem fällt unter eine allgemeine Formel der Bausteine 4,4'-Di(p-hydroxiphenoxy)-diphenylsulfon. Es wird jedoch kein Hinweis gegeben, welche Zusammensetzung erforderlich ist, um die gewünschten Eigenschaften zu erzielen.

Es war deshalb die technische Aufgabe gestellt, vollaromatische mesomorphe Polyetherester zur Verfügung zu stellen, die unterhalb von 320°C eine flüssig-kristalline fadenbildende Schmelze zeigen, und sich somit leichter verarbeiten lassen. Ferner war die technische Aufgabe gestellt, mesomorphe Polyetherester zur Verfügung zu stellen, die eine hohe Wärmeformbeständigkeit, eine gute Abriebfestigkeit sowie eine gute Zähigkeit aufweisen.

Diese Aufgabe wird gelöst durch vollaromatische mesomorphe Polyetherester, die unterhalb von 320°C eine flüssig-kristalline fadenbildende Schmelze bilden, aufgebaut aus

a) mindestens 10 Mol.% wiederkehrenden Einheiten der Formel I

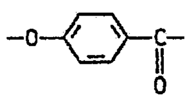

I

b) einer Summe der Komponenten c) und d) entsprechenden äquivalenten molaren Menge von wiederkehrenden Einheiten der Formel II

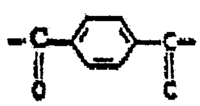

II

c) 3 bis 20 Mol.% wiederkehrenden Einheiten der Formeln III und/oder IV

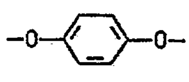

III

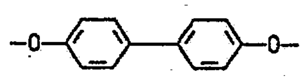

IV

d) 5 bis 30 Mol.% wiederkehrenden Einheiten der Formel V

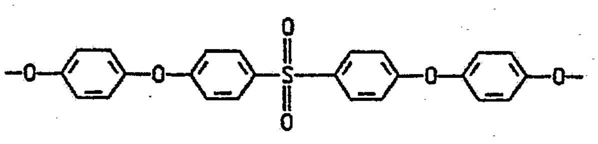

V

wobei sich die Summe der molaren Anteile der Komponenten a, b, c und d jeweils auf 100 Mol.% ergänzen.

Die erfindungsgemäßen vollaromatischen Polyetherester haben den Vorteil, daß sie eine hohe Wärmeformbeständigkeit und eine glatte abriebfeste Oberfläche aufweisen. Weiter haben die neuen vollaromatischen Polyetherester den Vorteil, daß sie sich unterhalb 320°C verarbeiten lassen und zudem sich durch hohe Steifigkeit, Festigkeit und Zähigkeit auszeichnen. Ferner haben die neuen Polyetherester den Vorteil, daß sie schwer brennbar sind.

Der flüssigkristalline Zustand der Polyetherester kann mit dem Polarisationsmikroskop nach einer in der DE-AS 2 520 819 beschriebenen Methode nachgewiesen werden. Zwischen gekreuzten Polarisatoren weisen die Polymerschmelzen, die in einer Schichtdicke von 10 µm zwischen Glasplatten aufgetragen, Texturen auf, die einer mesomorphen Phase zugeordnet werden können.

Als Ausgangsstoff der Formel I wird 4-Hydroxibenzoesäure verwendet.

Als Ausgangsverbindung der Formel II wird vorteilhaft Terephthalsäure verwendet.

Als Ausgangsverbindung der Formel III wird z.B. Hydrochinon verwendet.

Als Ausgangsverbindung der Formel IV wird z.B. 4,4'-Dihydroxibiphenyl verwendet.

Als Ausgangsverbindung der Formel V wird vorteilhaft 4,4'-Di-(p-hydroxiphenoxy)-diphenylsulfon verwendet.

Bevorzugte Polyetherester sind aufgebaut aus mindestens 20 Mol.%, vorteilhaft bis zu 50 Mol.% der Komponente a), 10 bis 25 Mol.% der Komponente d), 5 bis 15 Mol.% der Komponente c) und einer Summe aus c) und d) entsprechenden äquivalenten molaren Menge der Komponente b). Vorteilhaft enthalten die Polyetherester als Komponente c) 5 bis 15 Mol wiederkehrende Einheiten der Formel III oder eines Gemisches aus wiederkehrenden Einheiten der Formeln III und VI.

Bevorzugte vollaromatische flüssigkristalline Polyetherester haben eine Glastemperatur von $\geq$140°C, insbesondere größer $\geq$150°C. Die Glastemperatur soll dabei gemessen werden mit der DSC-Methode, wie sie beschrieben ist von K.H. Illers u.a. in Makromol. Chem., 127 (1969). Seite 1ff. Die erfindungsgemäßen flüssigkristallinen Polyetherester bilden bei einer Temperatur <320°C insbesondere bei einer Temperatur <300°C eine flüssigkristalline fadenbildende Schmelze.

Die erfindungsgemäßen flüssigkristallinen Polyetherester lassen sich erhalten durch eine Reihe von Techniken, wie sie beispielsweise in der US-PS 4 375 530 und US-PS 4 118 372 beschrieben werden.

Nach einer vorteilhaften Arbeitsweise erhält man die erfindungsgemäßen Polyetherester in einem Einstufen-Verfahren, bei dem man die underivatisierten Ausgangsstoffe unter Verwendung von Anhydriden niederer Fettsäuren, z.B. Fettsäuren mit 2 bis 4 Kohlenstoffatomen, insbesondere Essigsäureanhydrid umsetzt. Hierbei ist es auch möglich, Katalysatoren, wie sie z.B. in der EP-A 131 846, Seite 9, beschrieben sind, in Mengen von 0,001 bis 1 Gew.% mitzuverwenden. Die Ausgangsstoffe werden zweckmäßig zusammen mit Fettsäureanhydrid, vorteilhaft in einem mindestens 5%igen molaren Überschuß, bezogen auf die vorhandenen Hydroxigruppen unter Inertgasatmosphäre und Rühren auf eine Temperatur verhitzt, bei der Rückfluß zu beobachten ist. Dabei wird vorteilhaft bis höchstens 5 Stunden, insbesondere bis zu 2 Stunden eine Temperatur von 130 bis 170°C eingehalten. Dann wird die Temperatur auf 250 bis 350°C gesteigert. Dabei werden überschüssiges Fettsäureanhydrid und Fettsäure abdestilliert. Zur Entfernung der bei der Reaktion entstehenden Fettsäure ist es vorteilhaft, gegen Ende der Kondensation verminderten Druck, z.B. 300 bis 0,1 mbar anzuwenden.

Bemerkenswert und nicht vorherzusehen bei der Anwendung dieses Einstufen-Verfahrens ist zunächst die problemlose und vollständige Reaktion auch ohne Katalysator-Zusatz zu den gewünschten Polymeren in einer relativ kurzen Zeit. Dies ist umso bemerkenswerter, als durch die Vielzahl chemisch unterschiedliche Hydroxigruppen eine Abstufung der Reaktivitäten und damit ein mangelhafter polymerer Aufbau zu erwarten wäre.

Die so erhaltenen vollaromatischen flüssigkristallinen Polyetherester können in festem Zustand, z.B. bei Temperaturen von 150 bis 250°C in fester Phase weiter kondensiert werden, bis zur gewünschten Viskosität. Die Weiterkondensation kann sowohl vor, als auch nach einer thermoplastischen Verarbeitung erfolgen.

Die Polyetherester gemäß der Erfindung können durch Zusatzstoffe wie Stabilisatoren und Oxidationsverzögerer, Mittel gegen Wärmezersetzung und Zersetzung durch ultraviolettes Licht, Färbemittel wie Farbstoffe und Pigmente, faser- und pulverförmige Füllstoffe und Verstärkungsmittel in wirksamen Mengen modifiziert werden.

Die Stabilisatoren können den Polymeren in jedem Stadium der Herstellung oder den fertigen Polymeren zugesetzt werden. Vorzugsweise werden die Stabilisatoren zu einem frühen Zeitpunkt zugesetzt, um zu verhindern, daß die Zersetzung bereits beginnt, bevor die Polymeren geschützt werden können.

Zu den Oxidationsverzögerern und Wärmestabilisatoren, die den Polyetherestern gemäß der Erfindung zugesetzt werden können, gehören diejenigen, die allgemein zu Polymeren zugesetzt werden wie Halogenide von Metallen der Gruppe I des periodischen Systems, z.B. von Natrium, Kalium oder Lithium mit Kupfer-I-Halogeniden wie Chloriden, Bromiden oder Iodiden. Ferner sterisch gehinderte Phenole, Hydrochinone sowie verschiedene substituierte Vertreter dieser Gruppen und Kombinationen derselben in Konzentrationen bis 1 Gew.%, bezogen auf den Polyetherester.

Als UV-Stabilisatoren kann man ebenfalls diejenigen, die allgemein zu Polymeren zugesetzt werden, in Mengen bis 2,0 Gew.%, bezogen auf den Polyetherester verwenden. Beispiele für UV-Stabilisatoren sind verschiedene substituierte Resorcine, Salicilate, Benztriazole, Benzophenone und dergleichen.

Ferner können zugesetzt werden organische Farbstoffe wie Nikrosin, Pigmente wie Titandioxid, Cadmiumsulfid, Cadmiumsulfid-Selenid, Phthalocyanine, Ultramarinblau, Ruß, ferner faser- und pulverförmige Füllstoffe und Verstärkungsmittel wie Kohlenstoff-Fasern, Glasfasern, amorphe Kieselsäure, Asbest, Kalziumsilikat, Aluminiumsilikat, Magnesiumcarbonat, Kaolin, Kreide, gepulverter Quarz, Glimmer oder Feldspat in Mengen bis zu 70 Gew.%. Außerdem Keimbildungsmittel wie Talkum, Calciumfluorid, Natriumphenylphosphinat, Aluminiumoxid und feinteiliges Polytetrafluorethylen. Geeignete Zusatzmittel

sind auch Weichmacher in Mengen bis zu etwa 20 Gew.%, wie Phthalsäuredioctylester, Phthalsäuredibenzylester, Phthalsäurebutylbenzylester, Kohlenwasserstofföle, N-n-butylbenzolsul fonamid, o- und p-Toluolethylsulfonamid usw. Färbemittel wie Farbstoffe oder Pigmente können in Mengen bis zu 5 Gew.% angewandt werden.

Die erfindungsgemäßen vollaromatischen flüssig-kristallinen Polyetherester eignen sich zur Herstellung von Fäden, Folien, Schäumen und technischen Formteilen durch Spritzguß oder Extrusion.

Die aus den erfindungsgemäßen Polyetherestern hergestellten Formteile zeichnen sich durch hervorragende mechanische Eigenschaften wie Steifigkeit, Festigkeit und Zähigkeit aus. Sie sind außerordentlich chemikalienresistent und zudem flammwidrig. Außerdem zeichnen sie sich durch eine hohe Wärmeformbeständigkeit und eine glatte abriebfeste Oberfläche aus. Deshalb eignen sich die erfindungsgemäßen Polyetherester hervorragend zur Herstellung von Formteilen für die Elektro- und Datentechnik, im Fahrzeugbau und anderen technische Bereiche. Sie können aber auch als Überzugs- und Beschichtungsmittel, pulverförmig dispergiert oder als Film, verwendet werden.

Die Erfindung sei an folgenden Beispielen veranschaulicht.

Beispiel 1

0,2 Mol Terephthalsäure, 0,2 Mol p-Hydroxibenzoesäure, 0,05 Mol Hydrochinon und 0,15 Mol der Verbindung

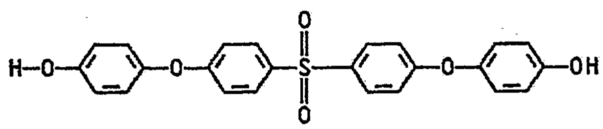

sowie 100 ml Essigsäureanhydrid werden unter Stickstoffatmosphäre und Rühren 45 Minuten bei 150°C Badtemperatur am Rückfluß gekocht. Anschließend wird innerhalb von 3 h 50 min die Temperatur von 150°C auf 350°C kontinuierlich gesteigert. Dabei werden überschüssiges Essigsäureanhydrid und Essigsäure abdestilliert.

Anschließend wird bei 350°C über einen Zeitraum von 45 min der Druck auf 190 mbar reduziert. Man erhält eine hochviskose fadenbildende Schmelze. Die Polymerschmelze und das erkaltete Polymer zeigen einen perlmuttartigen Glanz. Das Polymer besitzt eine glatte, harte und abriebfeste Oberfläche.

Entsprechend differentialkalorimetrischer Bestimmung (DSC) hat das Polymere eine Glasübegangstemperatur von 150°C. Die inhärente Viskosität des Polymeren beträgt 0,88 dl/g, gemessen in 0.1 %iger (Gew./Vol.) Lösung in Pentafluorphenol bei 60°C.

Das Polymer zeigt unter dem Polarisationsmikroskop bei gekreuzten Polarisatoren Texturen, wie sie für flüssig-kristalline Polymere typisch sind. Das Polymere läßt sich bei einer Temperatur von 300°C aus der Schmelze verarbeiten.

Beispiel 2

0,2 Mol Terephthalsäure, 0,3 Mol p-Hydroxibenzoesäure, 0,05 Mol Hydrochinon und 0.15 Mol der Verbindung

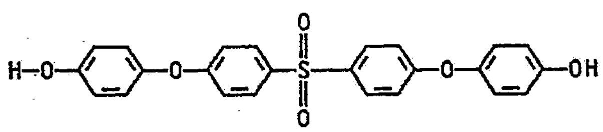

sowie 120 ml Essigsäureanhydrid werden nach dem in Beispiel 1 angegebenen Verfahren kondensiert.

Das Polymere besitzt eine glatte, harte und abriebfeste Oberfläche mit perlmuttartigem Glanz. Die DSC-Messung ergibt eine Glasübergangstemperatur von 165°C. Die inhärente Viskosität des Polymeren beträgt 0,93 dl/g. Das Polymere läßt sich bei 320°C aus der Schmelze verarbeiten.

Beispiel 3

0,2 Mol Terephthalsäure, 0,3 Mol p-Hydroxibenzoesäure, 0,05 Mol 4,4'-Dihydroxibiphenyl und 0,15 Mol der Verbindung

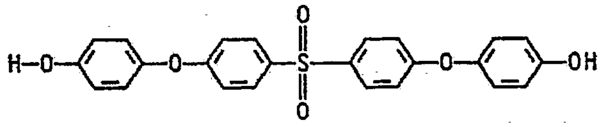

sowie 100 ml Essigsäureanhydrid werden nach dem in Beispiel 1 angegebenen Verfahren kondensiert.

Das Polymere besitzt eine glatte, harte und abriebfeste Oberfläche mit perlmuttartigem Glanz. Die DSC-Messung ergibt eine Glasübergangstemperatur von 155°C. Die inhärente Viskosität des Polymeren beträgt 0,89 dl/g.

Beispiel 4

0,2 Mol Terephthalsäure, 0,3 Mol p-Hydroxibenzoesäure, 0,05 Mol Hydrochinon, 0,05 Mol 4,4'-Dihydroxibiphenyl und 0,15 Mol der Verbindung

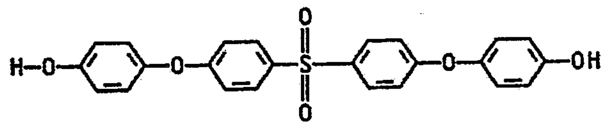

sowie 120 ml Essigsäureanhydrid werden nach dem in Beispiel 1 beschriebenen Verfahren kondensiert. Die Endtemperatur betrug hierbei nur 300°C.

Das Polymere besitzt eine glatte, harte und abriebfeste Oberfläche mit perlmuttartigem Glanz. Die DSC-Messung ergibt eine Glasübergangstemperatur von 155°C. Die inhärente Viskosität des Polymeren beträgt 0,86 dl/g.

Beispiel 5 (Vergleich)

0,3 Mol Terephthalsäure, 0,18 Mol Hydrochinon, 0,03 Mol 4,4'-Dihydroxibiphenyl und 0,09 Mol der Verbindung

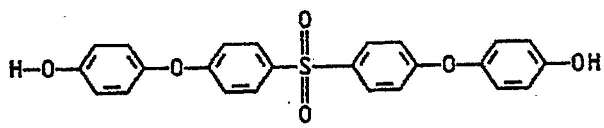

sowie 80 ml Essigsäureanhydrid werden nach dem in Beispiel 1 beschriebenen Verfahren kondensiert.

Das Polymere, dessen Zusammensetzung sich außerhalb des beanspruchten Bereichs bewegt, zeigt eine graue Farbe, eine nichtglänzende Oberfläche und eine pastenartige Konsistenz. Durch Reiben lassen sich Partikel aus der Oberfläche herauslösen.

**Patentansprüche für die Vertragsstaaten: BE, CH, DE, FR, GB, IT, LI, LU, NL, SE**

1. Vollaromatische mesomorphe Polyetherester, die unterhalb von 320°C eine flüssig-kristalline fadenbildende Schmelze bilden, aufgebaut aus

a) mindestens 10 Mol.% wiederkehrenden Einheiten der Formel I

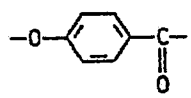 I

b) einer Summe der Komponenten c) und d) entsprechenden äquivalenten molaren Menge von wiederkehrenden Einheiten der Formel II

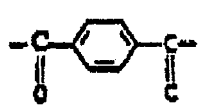 II

c) 3 bis 20 Mol.% wiederkehrenden Einheiten der Formeln III und/oder IV

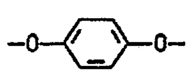

III

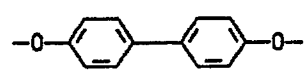

IV

d) 5 bis 30 Mol.% wiederkehrenden Einheiten der Formel V

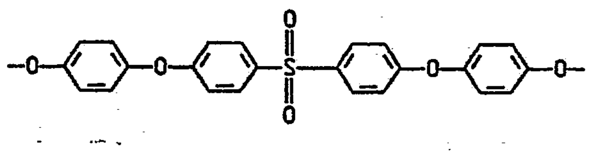 V

wobei sich die Summe der molaren Anteile der Komponenten a, b, c und d jeweils auf 100 Mol. ergänzt.

2. Vollaromatische mesomorphe Polyetherester nach Anspruch 1, aufgebaut aus

a) mindestens 20 Mol.% wiederkehrenden Einheiten der Formel I,

b) einer der Summe aus den Komponenten c) und d) entsprechenden äquivalenten molaren Menge wiederkehrenden Einheiten der Formel II,

c) 5 bis 15 Mol wiederkehrenden Einheiten der Formeln III und/oder VI

d) 10 bis 25 Mol% wiederkehrenden Einheiten der Formel V.

3. Vollaromatische mesomorphe Polyetherester nach den Ansprüchen 1 und 2, mit einer Glasübergangstemperatur vonTg ≥140°C.

4. Verfahren zur Herstellung vollaromatischen mesomorphen Polyetherestern nach den Ansprüchen 1 bis 3, dadurch gekennzeichnet, daß man die monomeren Ausgangsstoffe in einer Stufe in Form der underivatisierten Hydroxy- bzw. Carboxyverbindungen in den beschriebenn molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

5. Verfahren nach Anspruch 4, dadurch gekennzeichnet, daß die vollaromatischen mesomorphen Polyetherester in fester Phase bei einer Temperatur von 150 bis 250°C nachkondensiert werden.

6. Verwendung von vollaromatischen mesomorphen Polyetherestern nach den Ansprüchen 1 bis 5 zur Herstellung von Formteilen oder Überzügen.

**Patentansprüche für den Vertragsstaat: AT**

1. Verfahren zur Herstellung von vollaromatischen mesomorphen Polyetherestern, die unterhalb von 320°C eine flüssig-kristalline fadenbildende Schmelze bilden, durch Umsetzen der den Einheiten I bis V entsprechenden Hydroxi- und Carboxiverbindungen oder deren Ester bildenden Derivate, dadurch gekennzeichnet, daß sie aufgebaut sind aus

(a) mindestens 10 Mol.% wiederkehrenden Einheiten der Formeln I

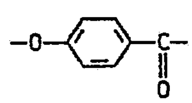 I

(b) einer Summe der Komponenten c) und d) entsprechenden äquivalenten molaren Menge von wiederkehrenden Einheiten der Formel II

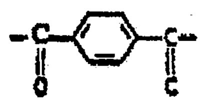 II

(c) 3 bis 20 Mol.% wiederkehrenden Einheiten der Formeln II und/oder VI

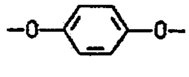 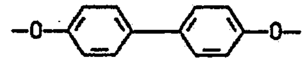

III IV

(d) 5 bis 30 Mol.% wiederkehrenden Einheiten der Formel V

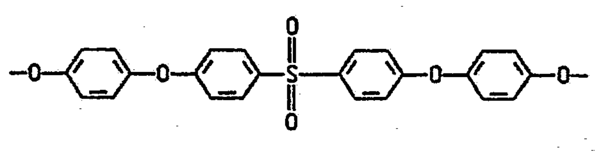 V

wobei sich die Summe der molaren Anteile der Komponenten a, b, c und d jeweils auf 100 Mol.% ergänzt.

2. Verfahren nach Anspruch 1, dadurch gekennzeichnet, daß die vollaromatischen mesomorphen Polyetherester aufgebaut sind aus

(a) mindestens 20 Mol.% wiederkehrenden Einheiten der Formel I

(b) einer der Summe aus den Komponenten c) und d) entsprechenden äquivalenten molaren Menge einer wiederkehrenden Einheiten der Formel II

(c) bis 15 Mol wiederkehrenden Einheiten der Formeln III und/oder VI

(d) 10 bis 25 Mol.% wiederkehrenden Einheiten der Formel V.

3. Verfahren nach den Ansprüchen 1 und 2, dadurch gekennzeichnet, daß die vollaromatischen mesomorphen Polyetherester eine Glasübergangstemperatur Tg ≧ 140°C haben.

4. Verfahren nach den Ansprüchen 1 bis 3, dadurch gekennzeichnet, daß man die monomeren Ausgangsstoffe in einer Stufe in Form der underivatisierten Hydroxy- bzw. Carboxyverbindungen in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

5. Verfahren nach den Ansprüchen 1 bis 4, dadurch gekennzeichnet, daß die vollaromatischen mesomorphen Polyetherester in fester Phase bei einer Temperatur von 150 bis 250°C nachkondensiert werden.

6. Verwendung von vollaromatischen mesomorphen Polyetherestern nach den Ansprüchen 1 bis 5 zur Herstellung von Formteilen oder Überzügen.

**Claims for the Contracting State: AT**

1. A process for preparing a wholly aromatic mesomorphic polyether ester which forms a liquid-crystalline fiber-forming melt below 320°C by reacting the hydroxy and carboxy compounds corresponding to the units I to V or ester-forming derivatives thereof, wherein the polyether ester is composed of

a) not less than 10 mol% of repeat units of the formula I

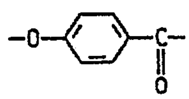

I

b) a molar amount equivalent to the total amount of components c) and d) of repeat units of the formula II

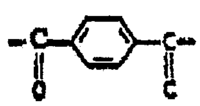

II

c) from 3 to 20 mol% of repeat units of the formulae III and/or IV

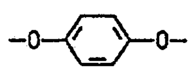

III

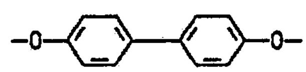

IV

and

d) from 5 to 30 mol% of repeat units of the formula V

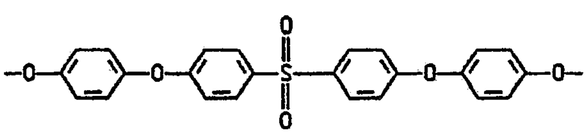

V

the molar proportions of components a, b, c and d adding up to 100 mol% in each case.

2. A process as claimed in claim 1, wherein the wholly aromatic mesomorphic polyether ester is composed of

a) not less than 20 mol% of repeat units of the formula I,

b) a molar amount equivalent to the total amount of components c) and d) of repeat units of the formula II,

c) from 5 to 15 mol% of repeat units of the formulae III and/or IV and

d) from 10 to 25 mol% of repeat units of the formula V.

3. A process as claimed in either of claims 1 and 2, wherein the wholly aromatic mesomorphic polyether ester has a glass transition temperature Tg ≥ 140°C.

4. A process as claimed in any of claims 1 to 3 which comprises reacting the monomeric starting materials in one stage in the form of the underivatized hydroxy or carboxy compounds in the molar ratios described in the presence of excess fatty acid anhydride at elevated temperatures and distilling off fatty acid anhydride and fatty acid out of the reaction mixture.

5. A process as claimed in any of claims 1 to 4, wherein the wholly aromatic mesomorphic polyether ester is postcondensed in the solid phase at 150–250°.

6. The use of a wholly aromatic mesomorphic polyether ester as claimed in any of claims 1 to 5 for producing moldings or coatings.

**Claims for the Contracting States: BE, CH, DE, FR, GB, IT, LI, LU, NL and SE**

1. A wholly aromatic mesomorphic polyether ester which forms a liquid-crystalline fiber-forming melt below 320°C and is composed of

a) not less than 10 mol% of repeat units of the formula I

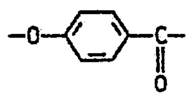

I

b) a molar amount equivalent to the total amount of components c) and d) of repeat units of the formula II

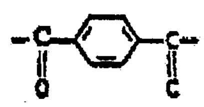

II

c) from 3 to 20 mol% of repeat units of the formulae III and/or IV

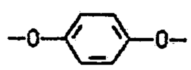

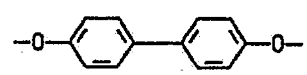

III IV

and

d) from 5 to 30 mol% of repeat units of the formula V

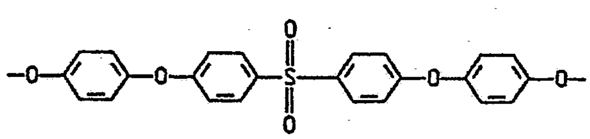

V

the molar proportions of components a, b, c and d adding up to 100 mol% in each case.

2. A wholly aromatic mesomorphic polyether ester as claimed in claim 1, composed of

a) not less than 20 mol% of repeat units of the formula I,

b) a molar amount equivalent to the total amount of components c) and d) of repeat units of the formula II,

c) from 5 to 15 mol% of repeat units of the formulae III and/or IV and

d) from 10 to 25 mol% of repeat units of the formula V.

3. A wholly aromatic mesomorphic polyether ester as claimed in either of claims 1 and 2, which has a glass transition temperature Tg ≥ 140°C.

4. A process for preparing a wholly aromatic mesomorphic polyether ester as claimed in any of claims 1 to 3 by reacting the monomeric starting materials in one stage in the form of the underivatized hydroxy or carboxy compounds in the molar ratios described in the presence of excess fatty acid anhydride at elevated temperatures and distilling off fatty acid anhydride and fatty acid out of the reaction mixture.

5. A process as claimed in claim 4, wherein the wholly aromatic mesomorphic polyether ester is postcondensed in the solid phase at 150–250°C.

6. The use of a wholly aromatic mesomorphic polyether ester as claimed in any of claims 1 to 5 for producing moldings or coatings.

**Revendications pour l'état contractant: AT**

1. Procédé de préparation de polyéthers-esters mésomorphes, totalement aromatiques, qui, en-dessous de 320°C, forment une masse fondue engendrant des fils, liquide-cristalline, par la réaction des dérivés formateurs des composés hydroxylés et carboxylés ou de leurs esters, correspondant aux unités I à V, caractérisé en ce qu'ils sont constitués

a) d'au moins 10% molaires d'unités récurrentes de la formule I

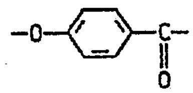 I

b) d'une quantité molaire équivalente correspondant à la somme des composants c) et d) d'unités récurrentes de la formule II

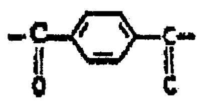 II

c) de 3 à 20% molaires d'unités récurrentes des formules III et/ou IV

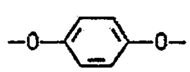

III

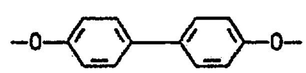

IV

d) de 5 à 30% molaires d'unités récurrentes de la formule V

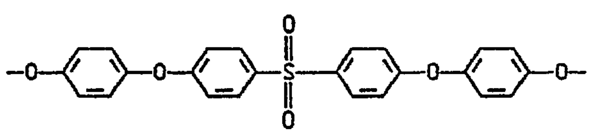 V

où la somme des fractions molaires des composants a, b, c et d parfait à chaque fois 100% molaires.

2. Polyéthers-esters mésomorphes, totalement aromatiques, selon la revendication 1, constitués

a) d'au moins 20% molaires d'unités récurrentes de la formule I,

b) d'une quantité molaire équivalente correspondant à la somme des composants c) et d) d'unités récurrentes de la formule II,

c) de 5 à 15% molaires d'unités récurrentes des formules III et/ ou IV,

d) de 10 à 25% molaires d'unités récurrentes de la formule V.

3. Polyéthers-esters mésomorphes, totalement aromatiques, selon les revendications 1 et 2, avec une température de transition vitreuse Tg égale ou supérieure à 140°C.

4. Procédé de préparation de polyéthers-esters mésomorphes, totalement aromatiques, selon les revendications 1 à 3, caractérisé en ce que l'on fait réagir les substances de départ monomères, en une étape, sous la forme des composés hydroxylés ou carboxylés non transformés en dérivés, dans les proportions molaires décrites, sous addition d'anhydride d'acide gras excédentaire, à température élevée, et on chasse l'anhydride d'acide gras et l'acide gras du mélange réactionnel par distillation.

5. Procédé suivant la revendication 4, caractérisé en ce que l'on procède à la post-condensation des polyéthers-esters mésomorphes, totalement aromatiques, en phase solide, à une température de 150 à 250°C.

6. Utilisation des polyéthers-esters mésomorphes, totalement aromatiques, selon les revendications 1 à 5, en vue de la fabrication d'articles moulés ou de revêtements.

**Revendications pour les états contractants: BE, CH, DE, FR, GB, IT, LI, LU, NL, SE**

1. Polyéthers-esters mésomorphes, totalement aromatiques, qui, en-dessous de 320°C, forment une masse fondue engendrant des fils, liquide-cristalline, constitués

a) d'au moins 10% molaires d'unités récurrentes de la formule I

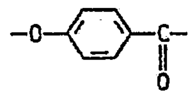

I

b) d'une quantité molaire équivalente correspondant à la somme des composants c) et d) d'unités récurrentes de la formule II

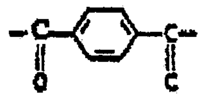

II

c) de 3 à 20% molaires d'unités récurrentes des formules III et/ou IV

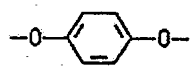

III

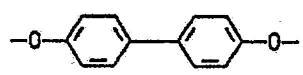

IV

d) de 5 à 30% molaires d'unités récurrentes de la formule V

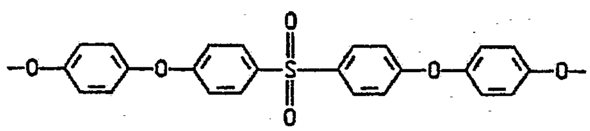

V

où la somme des fractions molaires des composants a, b, c et d parfait à chaque fois 100% molaires.

2. Procédé suivant la revendication 1, caractérisé en ce que les polyéthers-esters mésomorphes, totalement aromatiques, sont constitués

a) d'au moins 20% molaires d'unités récurrentes de la formule I,

b) d'une quantité molaire équivalente correspondant à la somme des composants c) et d) d'unités récurrentes de la formule II,

c) de 5 à 15% molaires d'unités récurrentes des formules III et/ou IV,

d) de 10 à 25% molaires d'unités récurrentes de la formule V.

3. Procédé suivant l'une des revendications 1 et 2, caractérisé en ce que les polyéthers-esters mésomorphes, totalement aromatiques, possèdent une température de transition vitreuse Tg égal ou supérieur à 140°C.

4. Procédé suivant les revendications 1 à 3, caractérisé en ce que l'on fait réagir les substances de départ monomères, en une étape, sous la forme des composés hydroxylés ou carboxylés non transformés en dérivés, en les proportions molaires décrites, sous addition d'anhydride d'acide gras excédentaire, à température élevée et on chasse l'anhydride d'acide gras et l'acide gras du mélange réactionnel par distillation.

5. Procédé selon les revendications 1 à 4, caractérisé en ce que l'on procède à la post-condensation des polyéthers-esters mésomorphes, totalement aromatiques, en phase solide, à une température de 150 à 250°C.

6. Utilisation de polyéthers-esters mésomorphes, totalement aromatiques, selon les revendications 1 à 5, en vue de l'obtention d'articles moulés ou de revêtements.